# EUROPÄISCHE PATENTSCHRIFT

(11) **EP 0 309 869 B1**
(45) Veröffentlichungstag und Bekanntmachung des Hinweises auf die Patenterteilung: **21.04.1993**
(21) Anmeldenummer: 88115412.4
(22) Anmeldetag: 20.09.1988
(51) Int. Cl.: G10L 5/06

(54) **Verfahren zur Kompensation von mit Störungen behafteten Sprachsignalen für Spracherkennungssysteme**
Method for the compensation of noise-contaminated speech signals for speech recognition systems
Procédé de compensation de signaux de parole entachés de bruit pour des systèmes de reconnaissance de la parole

(30) Priorität: 28.09.1987 DE 3732624; 16.11.1987 DE 3738871; 28.09.1987 DE 3732602; 16.11.1987 DE 3738870; 28.09.1987 DE 3732623; 16.11.1987 DE 3738868
(43) Veröffentlichungstag der Anmeldung: 05.04.1989
(73) Patentinhaber: SIEMENS AKTIENGESELLSCHAFT, 80333 München (DE)
(72) Erfinder: Elbert, Hartmut, Ing.-Grad., D-8029 Sauerlach (DE)

(56) Entgegenhaltungen:
- PATENT ABSTRACTS OF JAPAN, unexamined applications, Sektion E, Band 3, Nr. 113, 19. September 1979 THE PATENT OFFICE JAPANESE GOVERNMENT Seite 64 E 139
- PATENT ABSTRACTS OF JAPAN, unexamined applications, Sektion E, Band 3, Nr. 153, 15. Dezember 1979 THE PATENT OFFICE JAPANESE GOVERNMENT Seite 44 E 159

## Beschreibung

Die Erfindung betrifft ein Verfahren zur Kompensation von mit Störungen behafteten Sprachsignalen für Spracherkennungssysteme, bei denen nach Durchführung einer Sprachanalyse in Verbindung mit einer Datenreduktion den akustischen Eingangssignalen entsprechende Analyseparameter zur Weiterverarbeitung zur Verfügung stehen.

Zum Beispiel arbeiten sprecherabhängige Spracherkennungssysteme prinzipiell derart, daß eine erstmalige Spracheingabe innerhalb einer Lernphase erfolgt, in der die Merkmale der zu erkennenden Worte analysiert und in einen Referenzspeicher geladen werden. In sogenannten späteren Erkennungsphasen werden die relevanten Merkmale eingegebener Wörter, die sogenannten Analyseparatmeter, mit den abgespeicherten Referenzmustern verglichen und der jeweilige Ähnlichkeitsgrad festgestellt. Die Erkennungsraten der heutigen Spracherkennungssysteme sinken aber drastisch herab, wenn sich die Sprachsignale aufgrund auftretender Störungen in der Erkennungsphase gegenüber der Lernphase wesentlich unterscheiden.

Dies ist zum Beispiel der Fall beim Einsatz eines Spracherkennungssystems in einer Voice-Mail-Zentrale, welche die Bedienung von Voice-Mail-Systemen erheblich erleichtern würde. Will derzeit der Eiguntümer einer Voice-Mailbox über das öffentliche Fernsprechnetz auf seinen Sprachbriefkasten zugreifen, so kann lediglich eine entsprechende Zifferneingabe über einen an das Mikrofon des Handapparates zu haltenden Tonfrequenzsender erfolgen. Ein Spracherkennungssystem innerhalb einer Voice-Mail-Zentrale müßte trotz unterschiedlicher Signalverzerrungen durch die Übertragungsstrecke, das Mikrofon und die Raumakustik bei wechselnden Eingabeorten eine einwandfreie Worterkennung garantieren. Dies ist wie oben ausgeführt wurde, mit den heutigen Spracherkennungssystemen nicht möglich.

Die Erkennungsraten der heutigen Spracherkennungssysteme sinken aber auch drastisch herab, wenn sich die Umgebungsgeräusche während der Lernphase und der Erkennungsphase wesentlich unterscheiden.

Dies ist zum Beispiel der Fall, wenn Spracherkennungssysteme in Kommunikationsendgeräten im Büro zur Erhöhung des Bedienungskomforts im Freisprechbetrieb eingesetzt werden sollen. Die hierbei von Mikrofon aufgefangenen laufend wechselnden Umgebungsgeräusche addieren sich zum Sprachsignal und machen eine ausreichend sichere Erkennung bei herkömmlichen Spracherkennungssystemen unmöglich.

Auch bei in Fahrzeugen installierten Spracherkennungssystemen können sich die Umgebungsgeräusche während der Lernphase und der Erkennungsphase wesentlich unterscheiden. Dies ist zum Beispiel in einem Kraftfahrzeug der Fall, bei dem unterschiedliche Betriebsarten von z.B. Standbetrieb bis Autobahnbetrieb mit unterschiedlichster Geräuschbelastung möglich sind.

Aufgabe der vorliegenden Erfindung ist es, Verfahren der eingangs genannten Art anzugeben, die den sicheren Einsatz von Spracherkennungssystemen bei unterschiedlichen Verwendungsmöglichkeiten erlauben.

Diese Aufgabe wird erfindungsgemäß für ein Verfahren der eingangs genannten Art, welches die Bedienung von Spracherkennungssystemen über das Fernsprechnetz ermöglichen soll, dadurch gelöst, daß die Analyseparameter eines dem Spracherkennungssystem lokal eingegebenen Codeworts des Benutzers abgespeichert werden, daß jeweils nach Aufbau einer bestimmten Verbindung die Analyseparameter des vom Benutzer vor der eigentlichen Spracheingabe über das Fernsprechnetz eingegebenen Codeworts durch die abgespeicherten Analyseparameter des lokal eingegebenen Codeworts dividiert werden, daß die Divisionsergebnisse die Korrekturparameter bilden, durch die während der eigentlichen Spracheingabe die die störungsbehafteten Sprachsignale repräsentierenden Analyseparameter dividiert werden, und daß die derart korrigierten Analyseparameter dem eigentlichen Mustervergleich zugrundegelegt werden.

Dadurch, daß der Bezug gebildet wird zwischen den Analyseparametern zweier gleicher Codeworte, von denen das eine lokal in das Spracherkennungssystem eingegeben wird und das andere jeweils über einen bestimmten Verbindungsweg dem Spracherkennungssystem zugeführt wird, wird der Störeinfluß des Verbindungsweges auf die Analyseparameter ermittelt um den bei nachfolgenden Worteingaben die Analyseparatmeter korrigiert werden müssen, um den Störeinfluß der Fernsprechverbindung zu eliminieren. Damit stehen für die eigentliche Worterkennung Analyseparameter der Sprachsignale zur Verfügung, die keine Störeinflüsse des Verbindungsweges aufweisen. Auf diese Weise ist auch bei der Bedienung eines Spracherkennungssystems in einer Fernsprechzentrale, wobei die Spracheingabe von einem beliebigen Endgerät aus erfolgt, eine sichere Spracherkennung gewährleistet.

Eine zweckmäßige Weiterbildung dieses Verfahrens ist dadurch gekennzeichnet, daß vor oder nach der Sprachanalyse eine Funktionseinheit mit logarithmischem Spannungsverlauf, wie beispielsweise ein logarithmischer Analog-Digital-Wandler angeordnet ist, daß die Korrekturwertbildung durch die Subtraktion der Analyseparatmeter eines lokal eingegebenen Codeworts von den Analyseparametern eines dem Spracherkennungssystem über einen bestimmten Verbindungsweg zugeführten Codeworts erfolgt und daß die Korrektur durch die Subtraktion der Korrekturwerte von den Analyseparametern der anschließenden, über den gleichen Verbindungsweg laufenden Spracheingaben durchgeführt wird. Da die Störungen auf dem Übertragungsweg sich multiplikativ auswirken, ermöglicht der Einsatz eines logarithmischen Analog-Digital-Wandlers bei der Korrektur der Analyseparameter einfache Subtraktionen.

Weiterhin ist es vorteilhaft zur Ermittlung der Korrekturwerte ein akustisches Signal nach Art eines Pfeiftones oder eines diskret gesprochenen Buchstabens bzw. ein Rauschsignal zu verwenden. Hierdurch werden zur Bildung der Korrekturwerte genau definierte Ausgangssignale zur Verfügung gestellt.

Für ein Verfahren der eingangs genannten Art, welches die Anwendung von Spracherkennungssystemen in Kommunikationsendgeräten vorsieht, wird die vorgegebene Aufgabe erfindungsgemäß dadurch gelöst, daß ein zweites Mikrofon in Verbindung mit einer zweiten gleichartigen Analysestufe zur Durchführung einer Sprachanalyse vorgesehen ist, daß die beiden Mikrofone in Bezug auf den Sprecher so angeordnet sind, daß die aus dem Störgeräusch resultierenden Anteile der Analyseparameter für beide Analysestufen gleich groß sind, während die aus dem Sprachsignal resultierenden Anteile der Analyseparameter für beide Analysestufen unterschiedlich groß sind, daß während der Spracheingabe die Analyseparameter mit dem kleineren Sprachsignalanteil von den Analyseparametern mit dem größeren Sprachsignalanteil abgezogen werden, und daß jeweils die Differenz aus diesen beiden Analyseparametern als korrigierter Analyseparameter der eigentlichen Worterkennung zugrundegelegt wird.

Bei diesem erfindungsgemäßen Verfahren wird durch die Anordnung eines zweiten Mikrofons und einer zweiten Analysestufe erreicht, daß die Anteile der Störsignale bei beiden Analyseparametern, sowohl bei dem Analyseparameter der Analysestufe A1 sowie dem Analyseparameter der Analysestufe A2 gleichgroß sind, was zur Folge hat, daß bei einer Subtraktion der beiden Analyseparameter die Störanteile entfallen. Da beide Analyseparameter unterschiedlich starke Anteile des Sprachsignals enthalten, wird zwar bei der Subtraktion der auf das eigentliche Sprachsignal fallende Anteil des Analyseparameters verringert, jedoch wird dieser Nachteil durch den Vorteil aufgewogen, daß der der eigentlichen Worterkennung zugrundegelegte Analyseparameter keinerlei Störanteile enthält, so daß ene einwandfreie Worterkennung gewährleistet ist. Ein weiterer Vorteil bei diesem Anwendungsfall liegt darin, daß durch die Verwendung eines zweiten Mikrofons mit einer zweiten Analysestufe zu jedem Zeitpunkt eine Kompensation der Störsignale erfolgt, so daß während der Spracheingabe auftretende Änderungen der Störgeräusche die Worterkennung des Spracherkennungssystems nicht negativ beeinflussen.

Die vorliegenden Erfindung zugrunde liegende Aufgabe wird für den Einsatz von Spracherkennungssystemen z.B. in Kraftfahrzeugen dadurch gelöst, daß bei jeder Aktivierung des Spracherkennungssystems vor der eigentlichen Spracheingabe die aktuellen Störsignale einer Sprachanalyse unterzogen werden und die die Störsignale repräsentierenden Analyseparameter als Korrekturwerte abgespeichert werden, daß während der Spracheingabe diese Korrekturwerte jeweils von den Analyseparametern abgezogen werden, welche das aus Störsignal und Sprachsignal resultierende Spektrum repräsentieren, und daß die derart korrigierten Analyseparameter der eigentlichen Worterkennung zugrundegelegt werden.

Dadurch wird erreicht, daß bei einer Störumgebung, die während der Dauer eines Eingabewortes annähernd konstant bleibt, von Störsignalen befreite Analyseparameter für die eigentliche Worterkennung herangezogen werden. Da als Korrekturwerte jeweils die Analyseparameter der aktuellen Störsignale herangezogen werden, stehen für die eigentliche Worterkennung die reinen Sprachsignale zur Verfügung, so daß die Störgeräusche keine Auswirkung auf die Auswertung haben. Die Anwendung eines Spracherkennungssystems kann z.B. zum Ansteuern eines Autotelefons dienen, wordurch sich für den Fahrer eine erhebliche Entlastung bei der Bedienung des Gerätes verbunden mit einer Erhöhung der Fahrsicherheit ergibt.

Hierbei ist es vorteilhaft für die Sprachanalyse eine Filterbank-Analyse, eine Fast-Fourier-Transformation-Analyse oder ähnliche Analyseverfahren vorzusehen, bei denen die Analyseparameter das Spektrum des Eingangssignals repräsentieren. Außerdem ist es sinnvoll im Interesse eines möglichst geringen Verarbeitungsaufwandes für die Korrektur einen linearen Analog-Digital-Wandler zu verwenden.

Die Erfindung wird nachfolgend anhand von in der Zeichnung dargestellten Ausführungsbeispielen näher beschrieben.

Es zeigen
- FIG 1: den prinzipiellen Aufbau eines sprecherabhängigen Spracherkennungssystems, das z.B. in einer Fernsprechzentrale installiert ist,
- FIG 2: den prinzipiellen Aufbau eines sprecherabhängigen Spracherkennungssystems, das z.B. in einem Kommunikationsendgerät installiert ist, und
- FIG 3: den prinzipiellen Aufbau eines sprecherabhängigen Spracherkennungssystems, das z.B. in einem Kraftfahrzeug installiert ist.

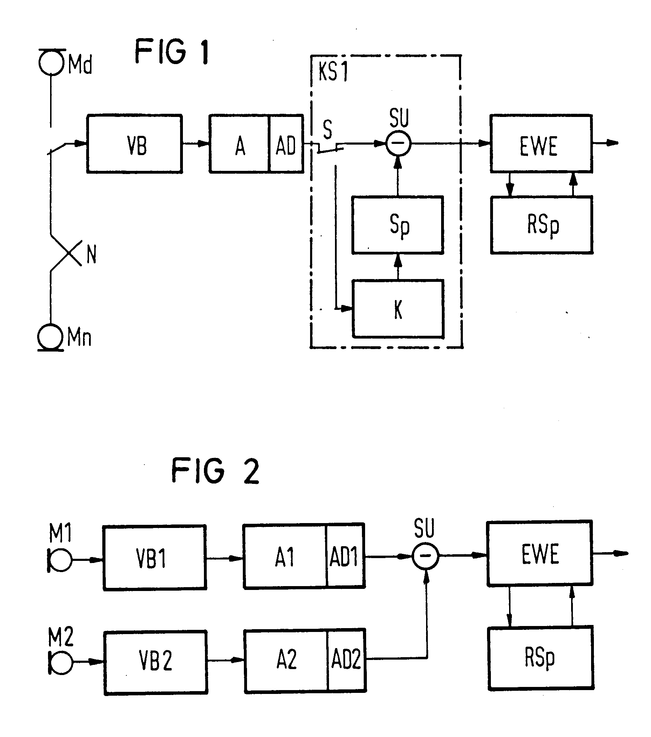

Figur 1 zeigt den prinzipiellen Aufbau eines sprecherabhängigen Sprächerkennungssystems, welches in einer Fernsprechzentrale installiert ist oder in einem Kommunikationsendgerät integriert sein kann und eine Korrekturschaltung Sl aufweist.

Auf den genauen Aufbau des Spracherkennungssystems soll im folgenden nur kurz eingegangen werden, da dieser Aufbau das erfindungsgemäße Verfahren nicht betrifft und den einschlägigen Fachleuten bekannt sein dürfte. Ein sprecherabhängiges Spracherkennungssystem besteht im wesentlichen aus drei Bausteinen, einem Vorverstärker VB, einer Analysestufe A und einer Detektionsschaltung EWE in Verbindung mit einem Referenzmusterspeicher RSp. Durch das jeweilige Anwendersystem wird das Spracherkennungssystem über die Befehle Verstärkungseinstellung, Lernen und Erkennen gesteuert. Die Verstärkungseinstellung bewirkt eine Anpassung des Signalpegels an die individuelle Sprachlautstärke.

Ein sprecherabhängiges Spracherkennungssystem erfordert eine Lernphase, in der die Merkmale der zu erkennenden Worte analysiert und in den Referenzspeicher geladen werden. In der Erkennungsphase werden die relevanten Merkmale des eingegebenen Wortes mit den abgespeicherten Referenzmustern verglichen und der Ähnlichkeitsgrad festgestellt. Mittels der Vorverstärkers VB erfolgt die Verstärkereinstellung sowie eine spektrale Entzerrung und eine Begrenzung des Frequenzbereichs des Sprachsignals als Vorbedingung für eine anschließende Digitalisierung. In der Analysestufe A erfolgt die Spektralanalyse der eingegebenen akustischen Signale. Während der Sprachanalyse wird z.B. alle 10 Millisekunden ein Satz spektraler Intensitätswerte ausgegeben und der Detektionsschaltung EWE zugeführt. Diese Detektionsschaltung führt in Zusammenhang mit dem Referenzmusterspeicher RSp den Vergleich der eingegebenen Sprachmuster mit den abgespeicherten Sprachmustern durch. Gleichzeitig steuert die Detektionsschaltung EWE die übrigen Bausteine des Spracherkennungssystems und sendet einzelnen Ergebnisse an das jeweilige Anwendersystem.

Nachfolgend wird in Verbindung mit einem vorteilhaft zu verwendenden logarithmischen Analog-Digital-Wandler das erfindungsgemäße Verfahren nach Patentanspruch 1 beschrieben. Voraussetzung hierbei ist, daß einmalig ein bestimmtes Codewort vom Benutzer direkt über ein Mikrofon Md in das Spracherkennungssystem eingegeben wird. Die von dem direkt eingegebenen Codewort in der Analysestufe A erstellten Analyseparameter werden über einen logarithmischen Analog-Digital-Wandler und dem Schalter S einer Schaltung zur Korrekturwertbildung K zugeführt und im Speicher Sp abgespeichert.

Für den Fall, daß ein Benutzer von einer beliebigen Fernsprechstelle aus das Spracherkennungssystem benutzen will, so gibt er zunächst vor des eigentlichen Spracheingabe sein gewähltes Codewort über das Netz N dem Spracherkennungssystem ein. Von diesem Codewort wird in der Analysestufe A ein Analyseparametersatz erstellt, der wiederum der Schaltung zur Korrekturwertbildung K zugeführt wird. In der Schaltung K wird der Analyseparametersatz des direkt in das Spracherkennungssystem eingegebene Codeworts von den Analyseparametern des über das Fernmeldenetz übertragenen Codeworts abgezogen. Diese Differenz bildet die eigentlichen Korrekturwerte und wird im Korrekturwertspeicher Sp abgelegt. Diese Korrekturwerte repräsantieren jeweils die Störbeeinflussung eines bestimmten Übertragungsweges. Da die Störbeeinflussung bezüglich der eigentlichen Sprachsignale multiplikativ erfolgt, wurde eine logarithmischer Analog-Digital-Wandler gewählt, was den Vorteil mit sich bringt, daß in der Korrekturschaltung zur Ermittlung des Korrekturwerts sowie zur Korrektur der eigentlichen Analyseparameter lediglich einfache Subtraktionen notwendig sind.

Während der eigentlichen Spracheingabe werden die Analyseparameter der mit den Störungen behafteten Sprachsignale über den Schalter S direkt der Subtraktionsschaltung SU zugeführt. In dieser Schaltung werden von den jeweils anliegenden Analyseparametern die Korrekturparameter bzw. die Korrekturwerte abgezogen, was nichts anderes bedeutet, als daß die jeweiligen Analyseparameter von ihren Störanteilen befreit werden. Der eigentlichen Worterkennung dient also ein gegenüber der Sprachreferenz von Störanteilen befreiter Analyseparameter, so daß eine einwandfreie Worterkennung gewährleistet ist.

Figur 2 zeigt den prinzipiellen Aufbau eines sprecherabhängigen Spracherkennungssystems nach Patentanspruch 4, das in einem Kommunikationsendgerät installiert ist.

Bezüglich des allgemeinen Aufbaus eines Spracherkennungssystems wird auf die einleitenden Ausführungen zum in Fig. 1 dargestellten Ausführungsbeispiels verwiesen.

Zusätzlich zu einem normalen Spracherkennungssystem sind zur Durchführung dieses erfindungsgemäßen Verfahrens ein zweites Mikrofon M2, ein zweiter Vorverstärker VB2, sowie eine zweite Analysestufe A2 und eine Subtraktionsschaltung SU vorgesehen. Der Vorverstärker VB2 und die Analysestufe A2 sind identisch mit dem Vorverstärker VB1 und der Analysestufe A1.

Zur Durchführung des Verfahrens ist das Mikrofon M1 in dem Kommunikationsendgerät installiert und somit in der Nähe des Benutzers angeordnet. Das zusätzliche Mikrofon M2 ist in einer bestimmten Entfernung vom Benutzer angeordnet, und zwar derart, daß die auf die beiden Mikrofone einwirkenden Störgeräuschpegel gleich sind, während vorzugsweise zwischen den auf das Mikrofon M1 und das Mikrofon M2 einfallenden Sprachsignale ein Unterschied von ungefähr 6 dB besteht. Die von den Mikrofonen M1 und M2 aufgenommenen Sprachsignale einschließlich der Störsignale werden in den beiden Vorverstärkern und den Analysestufen gleich behandelt. Bevor die am Ende der Sprachanalyse anfallenden Analyseparameter der Subtraktionsschaltung SU zugeführt werden, werden sie mittels eines linearen Analog-Digital-Wandlers digitalisiert. Bei dem beschriebenen Verfahren wurden lineare Analog-Digital-Wandler verwendet, da sich bei der Installation eines Spracherkennungssystems in einem Kommunikationsendgerät die Störsignale bezogen auf die Sprachsignale additiv auswirken.

Da in beiden Analyseparametersätzen der Anteil der Störsignale gleich ist, ergibt eine Subtraktion der beiden Analyseparametersätze, daß die die Störsignale repräsentierenden Anteile fortfallen. Am Ausgang der Subtraktionsschaltung SU liegt damit ein Analyseparametersatz zur weiteren Auswertung an, der keine Störsignale repräsentierende Anteile aufweist. Da bei dem er findungsgemäßen Verfahren der Analyseparameter mit dem Kleineren Sprachsignalanteil von dem Analyseparameter mit dem größeren Sprachsignalanteil abgezogen wird, ergibt es sich, daß der zur Auswertung anstehende keine Störanteile enthaltende Analyseparameter bezogen auf das Sprachsignal eine geringere Intensität aufweist als dies technisch möglich wäre. Dies bedeutet aber für die eigentliche Auswertung keinen Nachteil, da es bei der Auswertung in erster Linie auf störungsfreie Analyseparameter ankommt und nicht unbedingt auf die Intensität der einzelnen auszuwertenden Analyseparameter.

Mit einem derart ausgebildeten Spracherkennungssystem ist es also möglich ein Kommunikationsendgerät mittels Eingabe von bestimmten Befehlsworten im Freisprechbetrieb zu bedienen, was für den Benutzer einer erhebliche Erleichterung der Handhabung bedeutet.

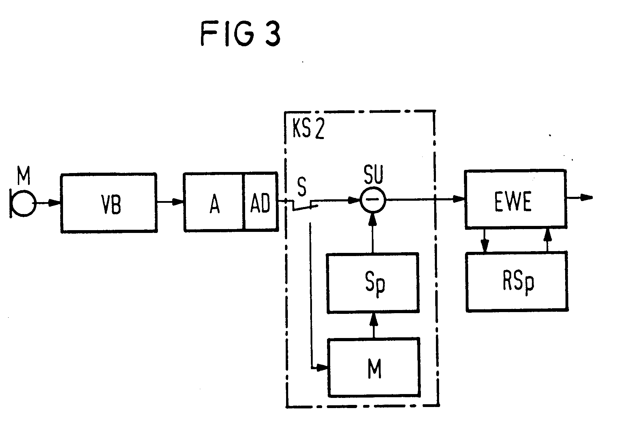

Figur 3 zeigt den prinzipiellen Aufbau eines sprecherabhängigen Spracherkennungssystems mit einer zusätzlichen Korrekturschaltung KS2, mit deren Hilfe die Verwendung von sprecherabhängigen Spracherkennungssystemen in Fahrzeugen möglich ist.

Bezüglich der Funktionen des Vorverstärkers VB, der Analysestufe A, des Analog-Digital-Wandlers AD, der Detektionsschaltung EWE und des Referenzspeichers RSp wird auf die Beschreibung zu Fig. 1 verwiesen.

Bei dieser Anwendungsart wird vor Beginn der eigentlichen Spracheingabe das aktuelle Störsignal über das Mikrofon und den Vorverstärker VB der Analysestufe A zugeführt. Der so ermittelte Analyseparametersatz des aktuellen Störsignals wird mit Hilfe des Schalters S dem Korrekturwertspeicher Sp zugeführt und dort abgespeichert. Vorher wird der jeweilige Analyseparameter mit Hilfe eines linearen Analog-Digital-Wandlers AD digitalisiert. In diesem Falle wird ein linearer Analog-Digital-Wandler gewählt, da bezogen auf die Sprachsignale die Störsignale additiv wirken. Die Analyseparameter werden jeweils für ein bestimmte Zeiteinheit, z.B. 10 Millisekunden, ausgegeben. Bei dem erfindungsgemäßen Verfahren werden die Korrekturwerte aus einem einmaligen Satz von Analyseparametern des aktuellen Störsignals gebildet oder als Korrekturwerte die Mittelwerte einer bestimmten Anzahl von Analyseparametersätzen des Störsignals gewählt. Eine derartige Mittelwertbildung würde dann in einer entsprechenden Schaltung M vorgenommen werden.

Während der eigentlichen Spracheingabe werden die einzelnen von der Analysestufe A ermittelten Analyseparameter über den Schalter S direkt der Subtraktionsschaltung SU zugeführt. In dieser Subtraktionsschaltung SU wird von den jeweiligen Analyseparametern der mit Störsignalen behafteten Sprachsignale der Korrekturwert, d.h. der Analyseparameter des aktuellen Störsignals abgezogen. Auf diese Weise steht zur Worterkennung in der Detektionsschaltung EWE ein von Störeinflußen befreiter Analyseparametersatz zur Verfügung. Voraussetzung dieser Verfahrensweise ist, daß davon ausgegangen wird, daß während einer Spracheingabe der störende Geräuschpegel konstant bleibt. Bei der Anwendung der vorliegenden Erfindung stand die Anwendung von Spracheingabe in Verbindung mit einem Autotelefon zur Entlastung des Fahrers bei Bedienung des Gerätes im Vordergrund. Denkbar ist jedoch auch die Anwendung des erfindungsgemäßen Verfahrens mit einem Spracherkennungssystem in Verbindung mit anderen Anwendersystemen.

Durch den Einsatz von Spracheingabe bei Autotelefonen reduziert sich der Wählvorgang auf das Abnehmen des Handapperates und das anschließende Einsprechen des gewünschten Teilnehmers bzw. von Teilnehmerziffern. Nach der Erkennung stellt das System automatisch die betreffende Telefonverbindung her, so daß der Fahrer während des ganzen Vorgangs seine uneingeschränkte Aufmerksamkeit dem Straßenverkehr widmen kann. Eine Wahlwiederholung im Falle eines erfolglosen Rufes könnte ebenfalls durch Spracheingabe aktiviert werden.

## Patentansprüche

1. Verfahren zur Kompensation von mit Störungen behafteten Sprachsignalen, hervorgerufen durch Übertragungsstrecke, Mikrofon und Raumakustik am Eingabeort bei Fernbedienung von Spracherkennungssystemen über das Fernspechnetz, bei denen nach Durchführung einer Sprachanalyse in Verbindung mit einer Datenreduktion den akustischen Eingangssignalen entsprechende Analyseparameter zur Weiterverarbeitung zur Verfügung stehen,
**dadurch gekennzeichnet,** daß die Analyseparameter eines dem Spracherkennungssystem lokal eingegebenen Codeworts des Benutzers abgespeichert werden, daß jeweils nach Aufbau einer bestimmten Verbindung die Analyseparameter des vom Benutzer vor der eigentlichen Spracheingabe über das Fernsprechnetz eingegebenen Codeworts durch die abgespeicherten Analyseparameter des lokal eingegebenen Codeworts dividiert werden, daß die Divisionsergebnisse die Korrekturparameter bilden, durch die während der eigentlichen Spracheingabe die die störungsbehafteten Sprachsignale repräsentierenden Analyseparameter dividiert werden, und daß die derart korrigierten Analyseparameter dem eigentlichen Mustervergleich zugrundegelegt werden.

2. Verfahren nach Anspruch 1,
**dadurch gekennzeichnet,** daß vor oder nach der Sprachanalyse eine Funktionseinheit mit logarithmischem Spannungsverlauf, wie beispielsweise ein logarithmischer Analog-Digital-Wandler angeordnet ist, daß die Korrekturwertbildung durch die Subtraktion der Analyseparameter eines lokal eingegebenen Codeworts von den Analyseparametern eines dem Spracherkennungssystem über einen bestimmten Verbindungsweg zugeführten Codeworts erfolgt und daß die Korrektur durch die Subtraktion der Korrekturwerte von den Analyseparametern der anschließenden, über den gleichen Verbindungsweg laufenden Spracheingaben durchgeführt wird.

3. Verfahren nach Anspruch 1 oder 2,
**dadurch gekennzeichnet,** daß zur Ermittlung der Korrekturwerte ein akustisches Signal nach Art eines Pfeiftones oder eines diskret gesprochenen Buchstabens bzw. ein Rauschsignal dient.

4. Verfahren zur Kompensation von mit Störungen behafteten Sprachsignalen für in Kommunikationsendgeräten installierte Spracherkennungssysteme, bei denen nach Durchführung einer Sprachanalyse in Verbindung mit einer Datenreduktion den akustischen Eingangssignalen entsprechende Analyseparameter zur Weiterverarbeitung zur Verfügung stehen,
**dadurch gekennzeichnet,** daß ein zweites Mikrofon in Verbindung mit einer zweiten gleichartigen Analysestufe zur Durchführung einer Sprachanalyse vorgesehen ist, daß die beiden Mikrofone in Bezug auf den Sprecher so angeordnet sind, daß die aus dem Störgeräusch resultierenden Anteile der Analyseparameter für beide Analysestufen gleich groß sind, während die aus dem Sprachsignal resultierenden Anteile der Analyseparameter für beide Analysestufen unterschiedlich groß sind, daß während der Spracheingabe die Analyseparameter mit dem kleineren Sprachsignalanteil von den Analyseparametern mit dem größeren Sprachsignalanteil abezogen werden, und daß jeweils die Differenz aus diesen beiden Analyseparametern als korrigierter Analyseparameter der eigentlichen Worterkennung zugrundegelegt wird.

5. Verfahren zur Kompensation von mit Störungen behafteten Sprachsignalen für in Fahrzeugen installierte Spracherkennungssysteme, bei denen nach Durchführung einer Sprachanalyse in Verbindung mit einer Datenreduktion den akustischen Eingangssignalen entsprechende Analyseparameter zur Weiterverarbeitung zur Verfügung stehen,
**dadurch gekennzeichnet,** daß bei jeder Aktivierung des Spracherkennungssystems vor der eigentlichen Spracheingabe die aktuellen Störsignale einer Sprachanalyse unterzogen werden und die die Störsignale repräsentierenden Analyseparameter als Korrekturwerte abgespeichert werden, daß während der Spracheingabe diese Korrekturwerte jeweils von den Analyseparametern abgezogen werden, welche das aus Störsignal und Sprachsignal resultierende Spektrum repräsentieren, und daß die derart korrigierten Analyseparameter der eigentlichen Worterkennung zugrundegelegt werden.

6. Verfahren nach Anspruch 5,
**dadurch gekennzeichnet,** daß in Sprechpausen des Eingabewortes ein weiterer aktueller Satz von Korrekturwerten zur Kompensation von Störgeräuschen, die sich während des Eingabewortes ändern, ermittelt wird.

7. Verfahren nach Anspruch 5 oder 6,
**dadurch gekennzeichnet,** daß der Satz von Korrekturwerten aus der Mittelwertbildung einer bestimmten Anzahl von Analyseparametersätzen resultiert.

8. Verfahren nach einem der Ansprüche 4 bis 7,
**dadurch gekennzeichnet,** daß für die Sprachanalyse ein Analyseverfahren vorgesehen ist, bei dem die Analyseparameter das Spektrum des Eingangssignals repräsentieren (z.B. Filterbank-Analyse, Fast-Fourier-Transformation-Analyse).

9. Verfahren nach einem der Ansprüche 4 bis 8,
**dadurch gekennzeichnet,** daß vor bzw. nach Durchführung der Sprachanalyse und der Datenreduktion die Daten einem linearen Analog-Digital-Wandler zugeführt werden.

## Claims

1. Method for compensating noise-disturbed voice signals produced by transmission link, microphone and room acoustics at the input location for remote operation of voice recognition systems via the telephone network, in which analysis parameters corresponding to the acoustic input signals are available for further processing after execution of a voice analysis in conjunction with a data reduction, characterised in that the analysis parameters of a code word of the user locally input into the voice recognition system are stored, in that, in each case after a defined connection has been established, the analysis parameters of the code word input by the user via the telephone network before the actual voice input are divided by the stored analysis parameters of the locally input code word, in that the results of the division form the correction parameters by which the analysis parameters representing the noise-disturbed voice signals are divided during the actual voice input, and in that the analysis parameters corrected in this way form the basis of the actual pattern comparison.

2. Method according to Claim 1, characterised in that a function unit having a logarithmic voltage curve, such as a logarithmic analog-to-digital converter for example, is arranged preceding or following the voice analysis, in that the correction values are formed by the subtraction of the analysis parameters of a locally input code word from the analysis parameters of a code word supplied to the voice recognition system via a defined connection path, and in that the correction is performed by the subtraction of the correction values from the analysis parameters of the subsequent voice inputs proceeding via the same connection path.

3. Method according to Claim 1 or 2, characterised in that an acoustic signal in the form of a whistling tone or a discretely spoken letter or a noise signal serves to determine the correction values.

4. Method for compensating noise-disturbed voice signals for voice recognition systems installed in communications terminals, in which analysis parameters corresponding to the acoustic input signals are available for further processing after execution of a voice analysis in conjunction with a data reduction, characterised in that a second microphone is provided in conjunction with a second, identical analysis stage for the execution of a voice analysis, in that the two microphones are arranged with respect to the speaker in such a way that the components of the analysis parameters resulting from the disturbing noise are of the same magnitude for both analysis stages, whereas the components of the analysis parameters resulting from the voice signal are of different magnitudes for the two analysis stages, in that, during the voice input, the analysis parameters having the smaller voice signal component are subtracted from the analysis parameters having the greater voice signal component, and in that in each case the difference between said two analysis parameters forms the basis of the actual word recognition as corrected analysis parameter.

5. Method for compensating noise-disturbed voice signals for voice recognition systems installed in vehicles, in which analysis parameters corresponding to the acoustic input signals are available for further processing after execution of a voice analysis in conjunction with a data reduction, characterised in that upon every activation of the voice recognition system, the current noise signals are subjected to a voice analysis before the actual voice input and the analysis parameters representing the noise signals are stored as correction values, in that, during the voice input, in each case said correction values are subtracted from the analysis parameters which represent the spectrum resulting from noise signal and voice signal, and in that the analysis parameters corrected in this way form the basis of the actual word recognition.

6. Method according to Claim 5, characterised in that, during speech pauses of the input word, a further, current set of correction values is determined for the compensation of disturbing noises that change during the input word.

7. Method according to Claim 5 or 6, characterised in that the set of correction values results from the formation of a mean value from a defined number of sets of analysis parameters.

8. Method according to one of Claims 4 to 7, characterised in that an analysis method is provided for the voice analysis in which the analysis parameters represent the spectrum of the input signal (for example filter bank analysis, fast Fourier transformation analysis).

9. Method according to one of Claims 4 to 8, characterised in that the data are supplied to a linear analog-to-digital converter before or after execution of the voice analysis and the data reduction.

## Revendications

1. Procédé pour compenser des signaux vocaux affectés de parasites, qui sont produits par une section de transmission, un microphone et l'acoustique de la pièce sur le lieu de réception dans le cas d'une télécommande, par l'intermédiaire du réseau téléphonique, de systèmes de reconnaissance de la parole, dans lesquels après l'exécution d'une analyse des signaux vocaux en liaison avec une réduction des données, des paramètres d'analyse correspondant aux signaux acoustiques d'entrée sont disponibles pour leur traitement ultérieur, caractérisé par le fait que les paramètres d'analyse d'un mot de code de l'utilisateur, introduit localement dans le système de reconnaissance de la parole, sont mémorisés, que respectivement, après établissement d'une liaison déterminée, les paramètres d'analyse du mot de code introduit par l'utilisateur par l'intermédiaire du réseau téléphonique avant l'introduction proprement dite des signaux vocaux, sont divisés par les paramètres d'analyse mémorisés du mot de code introduit localement, que les résultats de la division forment les paramètres de correction par lesquels les paramètres d'analyse, qui représentent les signaux vocaux parasités, sont divisés pendant l'introduction proprement dite des signaux vocaux, et que les paramètres d'analyse corrigés sont pris en compte pour la comparaison proprement dite à un modèle.

2. Procédé suivant la revendication 1, caractérisé par le fait qu'en amont ou en aval du système d'analyse des signaux vocaux, il est prévu une unité fonctionnelle à variation de tension logarithmique, comme par exemple un convertisseur analogique/numérique logarithmique, que la formation des valeurs de correction s'effectue par soustraction des paramètres d'analyse d'un mot de code introduit localement, des paramètres d'analyse d'un mot de code envoyé au système de reconnaissance de la parole par l'intermédiaire d'une voie de liaison déterminée, et que la correction est exécutée par soustraction des valeurs de correction des paramètres d'analyse, des entrées suivantes de signaux vocaux qui s'effectuent par l'intermédiaire de la même voie de liaison.

3. Procédé suivant la revendication 1 ou 2, caractérisé par le fait que pour la détermination des valeurs de correction, on utilise un signal acoustique du type sous la forme d'un sifflement ou d'une lettre prononcée de façon discrète, ou un signal de bruit.

4. Procédé pour compenser des signaux vocaux affectés de parasites pour des systèmes de reconnaissance de la parole installés dans des terminaux de communication et dans lesquels, après exécution d'une analyse des signaux vocaux en liaison avec une réduction des données, des paramètres d'analyse correspondant à des signaux acoustiques d'entrée sont disponibles pour leur traitement ultérieur, caractérisé par le fait qu'il est prévu un second microphone en liaison avec un second étage d'analyse identique pour l'exécution d'une analyse de signaux vocaux, que les deux microphones sont disposés par rapport au locuteur de telle sorte que les composantes, qui résultent du bruit parasite, des paramètres d'analyse pour les deux étages d'analyse sont identiques, tandis que les composantes, qui résultent du signal vocal, des paramètres d'analyse pour les deux étages d'analyse sont différentes, que pendant l'introduction des signaux vocaux, les paramètres d'analyse présentant la composante la plus faible des signaux vocaux sont soustraits des paramètres d'analyse comportant la composante la plus élevée des signaux vocaux et que la différence entre ces deux paramètres d'analyse est prise en compte pour la reconnaissance proprement dite de mots comme paramètre d'analyse corrigé.

5. Procédé pour compenser des signaux vocaux affectés de parasites pour des systèmes de reconnaissance de la parole installés dans des véhicules automobiles et dans lesquels, après exécution d'une analyse des signaux vocaux en liaison avec une réduction des données, des paramètres d'analyse correspondant à des signaux d'entrée acoustiques sont disponibles pour leur traitement ultérieur, caractérisé par le fait que chaque activation du système de reconnaissance de la parole, avant l'introduction proprement dite des signaux vocaux, les signaux parasites actuels sont soumis à une analyse des signaux vocaux et les paramètres d'analyse, qui représentent les signaux parasites, sont mémorisés en tant que valeurs de correction, que pendant l'introduction des signaux vocaux, ces valeurs de correction sont soustraites respectivement des paramètres d'analyse qui représentent le spectre résultant du signal parasite et du signal vocal, et que les paramètres d'analyse ainsi corrigés sont pris en compte pour la reconnaissance proprement dite de mots.

6. Procédé suivant la revendication 5, caractérisé par le fait que pendant les silences dans le mot d'entrée, un autre ensemble actuel de valeurs de correction est déterminé pour la compensation de bruits parasites, qui varient pendant le mot d'entrée.

7. Procédé suivant la revendication 5 ou 6, caractérisé par le fait que l'ensemble des valeurs de correction est obtenu à partir de la formation de la valeur moyenne d'un nombre déterminé d'ensembles de paramètres d'analyse.

8. Procédé suivant l'une des revendications 4 à 7, caractérisé par le fait que pour l'analyse des signaux vocaux il est prévu un procédé d'analyse, selon lequel les paramètres d'analyse représentent le spectre du signal d'entrée (par exemple analyse au moyen d'un bloc de filtre, analyse par transformation de Fourier rapide).

9. Procédé suivant l'une des revendications 4 à 8, caractérisé par le fait qu'avant ou après l'exécution de l'analyse des signaux vocaux et la réduction des données, les données sont envoyées à un convertisseur analogique/numérique linéaire.
